# FASCICULE DE BREVET EUROPEEN

(11) **EP 2 144 772 B1**
(45) Date de publication et mention de la délivrance du brevet: **01.12.2010**
(21) Numéro de dépôt: 08775735.7
(22) Date de dépôt: 21.03.2008
(51) Int. Cl.: B60J 10/04, B60J 1/00, B60J 1/20, B60R 13/00, B29C 37/02

(54) **HABILLAGE DE CADRE DE VITRE DE VEHICULE AUTOMOBILE**
BEFESTIGUNG FÜR EINEN AUTOMOBIL-FENSTERRAHMEN
FITTING FOR WINDOW FRAME OF AUTOMOBILE

(30) Priorité: 15.05.2007 FR 0755084
(43) Date de publication de la demande: 20.01.2010
(73) Titulaire: Renault SAS, 92100 Boulogne Billancourt (FR)
(72) Inventeur: BOUILLON, Jean-Charles, F-78940 La Queue Lez Yvelines (FR)
(86) Numéro de dépôt international: PCT/FR2008/050497
(87) Numéro de publication internationale: WO 2008/142310

(56) Documents cités:
- GB-A- 2 334 288
- US-A1- 2001 010 417
- US-A1- 2002 025 405

## Description

L'invention concerne un agencement d'une pièce d'habillage sur un cadre de vitre de véhicule automobile dans lequel la pièce d'habillage est un profilé dont une première paroi est fixée à une face externe d'un élément en tôle du cadre et une deuxième paroi comporte une extrémité en appui contre une face interne de l'élément en tôle. Un tel agencement est connu de GB 23 34 288A.

Une vitre de véhicule automobile est délimitée par un cadre métallique sur lequel est montée, du côté intérieur, une pièce d'habillage. Ladite pièce d'habillage est souvent fabriquée en plastique injecté.

La matière plastique utilisée, est souvent du polyamide, pour ses qualités de fluidité à l'injection. Cette matière, pour en améliorer la tenue, est souvent chargée en fibres de verre. Mais le polyamide a tendance à s'infiltrer dans les plans de joints du moule, ce qui crée des bavures inesthétiques qu'il faut ensuite retirer.

Par conséquent, en raison de l'ébavurage, il se crée une zone sur la pièce, dans laquelle les fibres de verre affleurent. Cette zone ébavurée devient ainsi abrasive.

De la sorte, lorsque cette zone ébavurée de la pièce est en appui sur la tôle du cadre, elle a tendance, lorsqu'elle se déplace, à attaquer la peinture du cadre, ce qui crée une usure de la peinture et des rayures inesthétiques.

Afin de pallier ces inconvénients, l'invention a pour objet un agencement d'une pièce d'habillage sur un cadre de vitre simple et économique.

L'invention a aussi pour objet un procédé d'ébavurage associé.

A cet effet, l'invention propose un agencement d'une pièce d'habillage sur un cadre de vitre du type cité ci-dessus, caractérisé en ce que l'extrémité de la deuxième paroi comporte, sur son côté en regard de l'élément en tôle, un bourrelet apte à être en contact avec l'élément en tôle, de manière à ménager un jeu entre l'extrémité de la deuxième paroi et l'élément en tôle.

Selon d'autres caractéristiques de l'invention:
- Le bourrelet présente, au voisinage de l'extrémité de la deuxième paroi, une partie sensiblement plane.
- Le jeu entre l'extrémité de la deuxième paroi de la pièce d'habillage et l'élément en tôle est inférieur à 0,25 millimètres.
- La pièce d'habillage est en polyamide et comporte des fibres de verre.

L'invention propose aussi un procédé d'ébavurage d'une pièce d'habillage, formée par un profilé comportant une paroi munie, au voisinage de son extrémité, d'un bourrelet, ledit procédé comprenant une première étape dans laquelle un outil tranchant est disposé perpendiculairement à l'extrémité de la paroi, en appui sur le bourrelet, et une deuxième étape dans laquelle l'outil est déplacé le long de l'extrémité de la paroi de manière à couper des bavures présentes sur ladite extrémité.

D'autres caractéristiques et avantages de l'invention apparaîtront à la lecture de la description d'exemples de réalisation d'un agencement d'une pièce d'habillage sur un cadre de porte de véhicule automobile en référence aux dessins annexés dans lesquels :
- La figure 1 est une vue schématique d'une porte comportant l'agencement selon l'invention.
- La figure 2 est une vue en coupe selon la direction II-II de l'agencement de la figure 1.
- La figure 3 est une vue d'un détail de l'agencement de la figure 2.

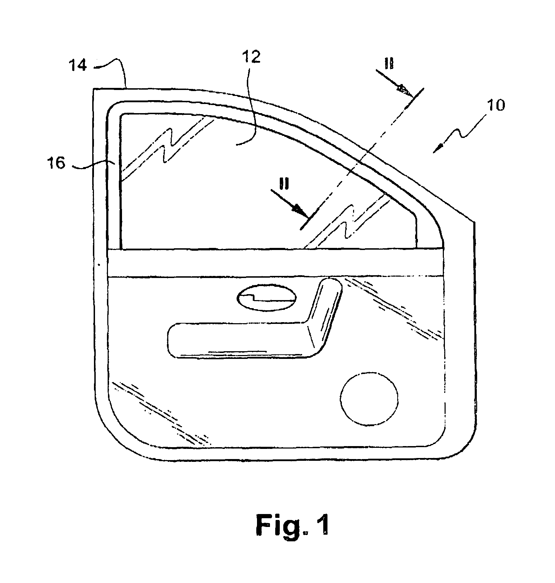

Tel que représenté à la figure 1, une porte 10 comporte une vitre 12 et un cadre de vitre 14. Le cadre de vitre 14 est au moins en partie recouvert par un pièce d'habillage 16.

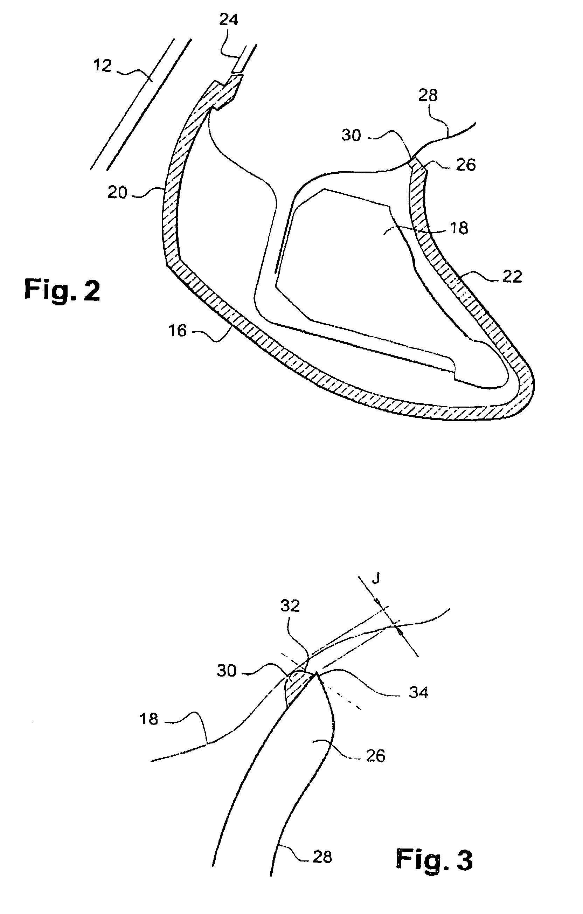

Tel que représenté à la figure 2, la pièce d'habillage 16 est un profilé en forme de U monté sur un élément en tôle 18 du cadre de vitre 14. La pièce d'habillage 16 est en matière plastique injectée de type polyamide 6.6 chargée en fibre de verre.

La pièce d'habillage 16 comporte une paroi extérieure 20, située au voisinage de la vitre 14, et une paroi intérieure 22, tournée vers l'habitacle du véhicule.

La paroi extérieure 20 de la pièce d'habillage 16 est fixée sur une face extérieure 24 de l'élément en tôle 18 tandis qu'une extrémité 26 de la paroi intérieure 22 est en appui contre une face intérieure 28 de l'élément en tôle 18.

L'extrémité 26 de la paroi intérieure 22 de la pièce 16 peut se déplacer librement le long de la face intérieure 28.

L'extrémité 26 de la paroi intérieure 22 comporte, en regard de l'élément de cadre 18, un bourrelet 30 apte à venir en appui contre la face intérieure 28 de l'élément 18.

Tel que représenté à la figure 3, le bourrelet 30 présente, sensiblement dans le prolongement de l'extrémité 26, une face sensiblement plane 32.

Ainsi, lorsque la paroi intérieure 22 de la pièce d'habillage 16 est en appui contre la face intérieure 28 de l'élément de cadre 18, ce n'est pas directement l'extrémité ébavurée qui est en contact avec l'élément 18 mais le bourrelet 30, ce qui évite ainsi le frottement abrasif de l'extrémité. Un jeu J est donc ménagé entre l'extrémité 26 et l'élément 18.

Le jeu J, pour des raisons esthétiques, est de préférence inférieur à 0,25 millimètres, mais pourrait être de dimensions supérieures.

Pour procéder à l'ébavurage de la pièce d'habillage 16, un outil tranchant est, dans une première étape, disposé selon une direction sensiblement perpendiculaire au plan de la paroi intérieure 22 (direction représentée par une ligne en pointillés) et en appui contre la partie plane 32 du bourrelet 30, puis dans une deuxième étape, il est déplacé le long de l'extrémité 26 de manière à couper des bavures éventuelles 34.

Le bourrelet 30 permet donc également de faciliter le processus d'ébavurage.

L'agencement selon l'invention permet ainsi, de manière simple et peu onéreuse mais aussi sans avoir à modifier le design du cadre de vitre, de supprimer les risques d'usure et de rayure de la peinture.

## Revendications

1. Agencement d'une pièce d'habillage (16) sur un cadre (14) de vitre (12) de véhicule automobile, dans lequel la pièce d'habillage (16) est un profilé dont une paroi extérieure (20) est fixée à une face externe (24) d'un élément en tôle (18) du cadre (14) et une paroi intérieure (22) comporte une extrémité (26) en appui contre une face intérieure (28) de l'élément en tôle (18), **caractérisé en ce que** l'extrémité (26) de la paroi intérieure (22) comporte, sur son côté en regard de l'élément en tôle (18), un bourrelet (30), apte à être en contact avec l'élément en tôle (18), de manière à ménager un jeu (J) entre l'extrémité (26) de la paroi intérieure (22) et l'élément en tôle (18).

2. Agencement d'une pièce d'habillage (16) selon la revendication 1, **caractérisé en ce que** le bourrelet (30) présente, au voisinage de l'extrémité (26) de la paroi intérieure (22), une partie sensiblement plane (32).

3. Agencement d'une pièce d'habillage (16) selon l'une quelconque des revendications précédentes, **caractérisé en ce que** le jeu (J) entre l'extrémité (26) de la paroi intérieure (22) de la pièce d'habillage (16) et l'élément en tôle (18) est inférieur à 0,25 millimètres.

4. Agencement d'une pièce d'habillage (16) selon l'une quelconque des revendications précédentes, **caractérisé en ce que** la pièce d'habillage (16) est en polyamide et comporte des fibres de verre.

5. Procédé d'ébavurage d'une pièce d'habillage (16), formée par un profilé comportant une paroi (20) munie, au voisinage de son extrémité, d'un bourrelet (30), comprenant une première étape dans laquelle un outil tranchant est disposé perpendiculairement au plan de la paroi (22), en appui sur une partie plane (32) du bourrelet (30), et une deuxième étape dans laquelle l'outil est déplacé le long de l'extrémité (26) de la paroi (22) de manière à couper des bavures (34) présentes sur ladite extrémité (26).

## Claims

1. Trim arrangement (16) on a frame (14) of an automobile window (12), in which the trim (16) is a profile having an outer wall (20) fixed to an outer face (24) of a sheet-metal member (18) of the frame (14) and an inner wall (22) with an end (26) bearing against an inner face (28) of the sheet-metal member (18), **characterized in that** the end (26) of the inner wall (22) has, on its side facing the sheet-metal member (18), a bead (30) suitable for making contact with the sheet-metal member (18) so as to form a clearance (J) between the end (26) of the inner wall (22) and the sheet-metal member (18).

2. Trim arrangement (16) according to Claim 1, **characterized in that** the bead (30) has, in the vicinity of the end (26) of the inner wall (22), a substantially flat part (32).

3. Trim arrangement (16) according to any one of the preceding claims, **characterized in that** the clearance (J) between the end (26) of the inner wall (22) of the trim (16) and the sheet-metal member (18) is less than 0.25 millimeters.

4. Trim arrangement (16) according to any one of the preceding claims, **characterized in that** the trim (16) is made of polyamide and contains glass fibers.

5. Method for deburring a trim (16) formed by a profile having a wall (20) provided, in the vicinity of its end, with a bead (30), comprising a first step where a cutting tool is arranged perpendicularly with respect to the plane of the wall (22), bearing against a flat part (32) of the bead (30), and a second step where the tool is displaced along the end (26) of the wall (22) so as to cut off any burrs (34) present on the said end (26).

## Patentansprüche

1. Anordnung eines Verkleidungsteils (16) an einem Rahmen (14) einer Kraftfahrzeugfensterscheibe (12), bei der das Verkleidungsteil (16) ein Profil ist, von dem eine Außenwand (20) an einer Außenfläche (24) eines Blechelements (18) des Rahmens (14) befestigt ist und eine Innenwand (22) ein Ende (26) umfasst, das an einer Innenfläche (28) des Blechelements (18) anliegt, **dadurch gekennzeichnet, dass** das Ende (26) der Innenwand (22) an seiner dem Blechelement (18) zugewandten Seite einen Wulst (30) umfasst, der geeignet ist, mit dem Blechelement (18) so in Kontakt zu stehen, dass zwischen dem Ende (26) der Innenwand (22) und dem Blechelement (18) Spiel (J) besteht.

2. Anordnung eines Verkleidungsteils (16) nach Anspruch 1, **dadurch gekennzeichnet, dass** der Wulst (30) neben dem Ende (26) der Innenwand (22) einen im Wesentlichen ebenen Teil (32) aufweist.

3. Anordnung eines Verkleidungsteils (16) nach einem der vorhergehenden Ansprüche, **dadurch gekennzeichnet, dass** das Spiel (J) zwischen dem Ende (26) der Innenwand (22) des Verkleidungsteils (16) und dem Blechelement (18) kleiner als 0,25 Millimeter ist.

4. Anordnung eines Verkleidungsteils (16) nach einem der vorhergehenden Ansprüche, **dadurch gekennzeichnet, dass** das Verkleidungsteil (16) aus Polyamid ist und Glasfasern umfasst.

5. Verfahren zum Besäumen eines Verkleidungsteils (16), das durch ein Profil gebildet ist, das eine Wand (20) umfasst, die neben ihrem Ende mit einem Wulst (30) versehen ist, mit einem ersten Schritt, bei dem ein Klingenwerkzeug senkrecht zur Ebene der Wand (22) und an einem ebenen Teil (32) des Wulstes (30) anliegend angeordnet wird, und einem zweiten Schritt, bei dem das Werkzeug entlang dem Ende (26) der Wand (22) verschoben wird, um an dem Ende (26) vorliegende Schneidgrate (34) abzuschneiden.
